# EUROPÄISCHE PATENTSCHRIFT

(11) **EP 1 103 496 B1**
(45) Veröffentlichungstag und Bekanntmachung des Hinweises auf die Patenterteilung: **11.08.2004**
(21) Anmeldenummer: 00122151.4
(22) Anmeldetag: 12.10.2000
(51) Int. Cl.: B65G 23/08

(54) **Rollenbahn eines Logistiksystems**
Roller track of a logistical system
Voie à rouleaux d'un système logistique

(30) Priorität: 26.10.1999 DE 19951506
(43) Veröffentlichungstag der Anmeldung: 30.05.2001
(73) Patentinhaber: SIEMENS AKTIENGESELLSCHAFT, 80333 München (DE)
(72) Erfinder: Limmer, Gerd, 90607 Rückersdorf (DE)

(56) Entgegenhaltungen:
- DE-A- 19 639 087
- US-A- 5 088 596

## Beschreibung

Die Erfindung bezieht sich auf eine Rollenbahn eines Logistiksystems, wobei die Rollen einen integrierten Antrieb aufweisen, der über zwei Kontakte an eine elektrische Energie versorgung anschließbar ist.

Derartige Rollenbahnen sind beispielsweise aus der US-PS 5 44 22 48 bekannt. Die einzelnen angetriebenen Rollen sind dabei so ausgebildet, daß im Rolleninneren ein elektrischer Motor befindlich ist, der über ein Getriebe den Mantel der Rolle antreibt. Die Zuleitung für die elektrische Energieversorgung erfolgt auf einer Rollenseite über zwei elektrische Kontakte. Diese werden dann im weiteren zweipolig zum Ort der Energiequelle verkabelt. Der elektrische Aufwand für eine derartige Verkabelung ist dabei relativ hoch. Der Aufwand erhöht sich, wenn auch informationsverarbeitende Einheiten mit angeschlossen werden sollten.

Aufgabe der Erfindung ist es, eine Rollenbahn der eingangs genannten Art so auszubilden, daß mit äußerst geringem Verkabelungsaufwand sowohl die Energiezufuhr zu den Antrieben der jeweils mit Antriebsmotor versehenen Rollen, als auch die Informationszufuhr zu den informationsverarbeitenden Einheiten erfolgt. In diesem Zusammenhang sei erwähnt, daß in einer Rollenbahn durchaus eine bestimmte Anzahl von nicht angetriebenen Rollen befindlich sein kann. Ferner ist es auch möglich, daß über Kuppelelemente die Bewegung von elektrisch angetriebenen Rollen auf motorlose Rollen übertragen wird.

Die obengenannte Aufgabe wird durch die Erfindung dadurch gelöst, daß informationsverarbeitende Einheiten integrale Bestandteile der Rolle sind. Damit ist zum einen sichergestellt, daß diese Einheiten gegenüber Umwelteinflüssen geschützt sind. Weiterhin wird durch die Erfindung eine einfache Verteilung dezentraler Steuerintelligenz in Logistiksystemen ermöglicht. Weiterhin erfolgt der Informationsfluss der Einheiten über den Pfad der elektrischen Energieversorgung. Die eigentliche Information wird dabei auf die Zuleitung aufmoduliert und ermöglicht eine dezentrale Intelligenz für die jeweiligen Rollen, wodurch beispielsweise Vorgänge wie sanftes Anfahren, sanftes Abbremsen, Erfassen von Betriebszuständen des Rollenantriebs, usw., ermöglicht sind. Durch diese Art der Energie- und Informationsversorgung wird erheblicher Verkabelungsaufwand eingespart.

Eine erste vorteilhafte Ausbildung der Erfindung ist dadurch gekennzeichnet, daß die informationsverarbeitenden Einheiten und die Elektronik für den Antrieb zu einem Elektronikmodul zusammengefaßt sind. Durch diese Gestaltung wird eine Verminderung des erforderlichen Bauvolumens erreicht und auch ein bedarfsweiser Austausch von fehlerhaften Elektronikelementen kann damit äußerst schnell erfolgen.

Durch die Ausgestaltung der Energieversorgung dergestalt, daß der eine Kontakt an eine isolierte Zuleitung und der andere Kontakt an ein elektrisch leitendes Traggestell der Rollenbahn geleitet ist, ergibt sich als Vorteil einerseits eine weitere Vereinfachung der Verkabelung und andererseits wird die Montage, sowie ein bedarfsweiser Austausch von Rollen erleichtert.

Ferner erweist es sich durch die Erfindung als vorteilhaft, daß über die Zuleitung weitere Aktoren oder Sensoren anschließbar sind. Damit können wesentliche Elemente für eine Automatisierung eines Logistiksystems über das gleiche elektrische System angekoppelt werden. Dadurch ist ein modularer Aufbau und die leichte Erweiterbarkeit des Logistiksystems gewährleistet.

Ein Ausführungsbeispiel der Erfindung ist in der Zeichnung dargestellt und wird im folgenden näher erläutert. Dabei zeigen:
- FIG 1: eine Prinzipdarstellung der Erfindung und
- FIG 2: eine Einzelheit zur Anbringung eines Sensors.

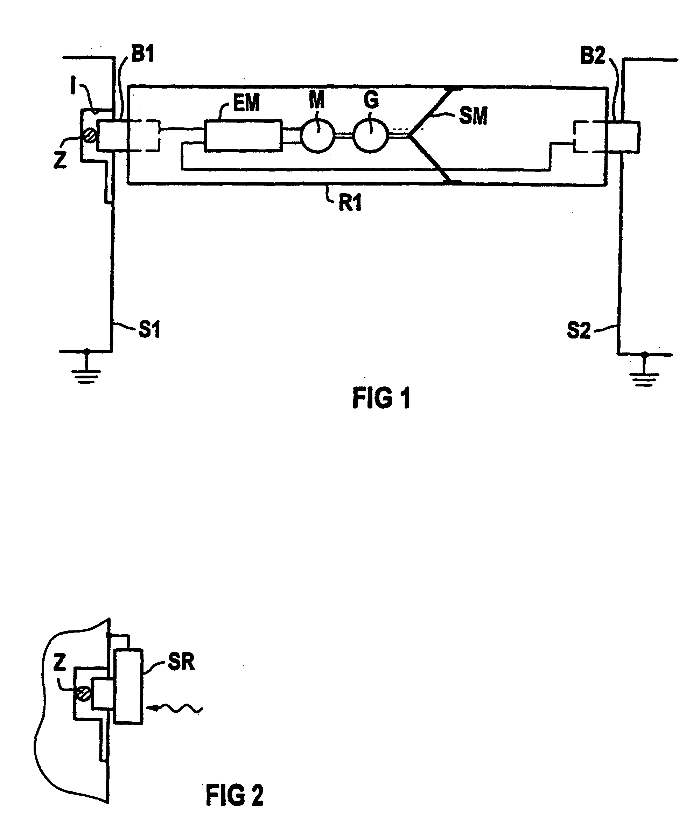

In der Darstellung gemäß FIG 1 ist eine Rolle R1 einer Rollenbahn gezeigt, deren weitere Rollen in der Tiefe hinter der Rolle R1 gestaffelt angeordnet sein können. Diese und die weiteren Rollen sind in Ständerelementen S1 und S2 eines Traggestelles fixiert. Die Rolle R1 ist eine aktive Rolle, die einen Motor M aufweist, der über ein Getriebe G und eine Spreizmechanik SM den Mantel der Rolle R1 in Rotation versetzt. Dazu wird der Motor M über ein Elektronikmodul EM mit Leistung versorgt, wobei der Energiefluß hierzu über ein Befestigungsteil B1, das einen ersten Kontakt darstellt, und ein Befestigungsteil B2, das einen zweiten Kontakt darstellt, erreicht wird. Das Befestigungsteil B1 ist dabei elektrisch mit einer Zuleitung Z kontaktiert, die beispielsweise in einem Isolierteil I am Ständerelement S1 gehaltert ist. Das Befestigungsteil B2 ist elektrisch mit dem Ständerelement S2 kontaktiert, das ebenso wie das Ständerelement S1 des Traggestells an Masse geschaltet ist.

Die Befestigungsteile B1 und B2 sollten dergestalt sein, daß sich die Rolle R1 "Plug & Play"-mäßig im Traggestell befestigen läßt und daher ihre Arbeitsweise ohne weitere Montage- bzw. Befestigungsschritte möglich ist. Das Befestigungsteil B1, das den Kontakt zur Zuleitung Z darstellt, kann dabei auf unterschiedliche Art ausgebildet sein. So kann der Kontakt zur Zuleitung Z auf der Stirnseite von Befestigungsteil B1 durch einen kugelförmigen Mechanismus mit Federelement erfolgen, aber auch ein Kontaktelement, das mit Befestigungsteil B1 mit einer Klammer verbunden ist, kann über Kontaktkohle auf die Zuleitung Z aufsetzen. Die diesbezüglichen Einzelheiten sind der Übersichtlichkeit halber nicht dargestellt.

Das Elektronikmodul EM kann jedoch ferner auch eine informationsübertragende Einheit beinhalten, die durch Aufmodulieren von informationstragenden Signalenauf den Energiepfad eine bidirektionale Kommunikation mit anderen an den Energiepfad angeschlossenen informationsverarbeitenden Einheiten, so auch mit einer Zentrale, ermöglichen kann.

Ferner ist es, wie die Darstellung gemäß FIG 2 zeigt, auch möglich, daß Sensoren, so ein Sensor SR, an die Zuleitung Z gekoppelt werden. Die Ankopplung kann dabei in gleicher oder ähnlicher Weise wie beim Ankoppeln von Rollen erfolgen.

In gleicher Weise ließen sich auch Aktoren in das System einbinden.

## Patentansprüche

1. Rollenbahn eines Logistiksystems, wobei die Rollen einen integrierten Antrieb aufweisen, der über zwei Kontakte an eine elektrische Energieversorgung anschließbar ist,
**dadurch gekennzeichnet,**
**daß** informationsverarbeitende Einheiten (EM) zur Steuerung des Antriebs integrale Bestandteile der Rollen (R1) sind, wobei der Informationsfluss der Einheiten über den elektrischen Pfad der Energieversorgung erfolgt.

2. Rollenbahn nach Anspruch 1,
**dadurch gekennzeichnet,**
**daß** die informationsverarbeitenden Einheiten und Elektronik für den Antrieb zu einem Elektronikmodul (EM) zusammengefaßt sind.

3. Rollenbahn nach Anspruch 1,
**dadurch gekennzeichnet,**
**daß** der eine Kontakt (B1) an eine isolierte Zuleitung (Z) und der andere Kontakt (B2) an ein elektrisch leitendes Traggestell (B1, B2) der Rollenbahn geschaltet ist.

4. Rollenbahn nach einem der vorstehenden Ansprüche,
**dadurch gekennzeichnet,**
**daß** über die Zuleitung (Z) weitere Aktoren oder Sensoren (SR) anschließbar sind.

## Claims

1. Roller track of a logistical system, the rollers having an integrated drive which can be connected to an electric power supply via two contacts, **characterized in that** information-processing units (EM) for controlling the drive are integral constituent parts of the rollers (R1), the information flow from the units taking place via the electrical path of the power supply.

2. Roller track according to Claim 1, **characterized in that** the information-processing units and electronics for the drive are combined to form an electronics module (EM).

3. Roller track according to Claim 1, **characterized in that** one contact (B1) is connected to an insulated feed line (Z) and the other contact (B2) is connected to an electrically conductive load-bearing frame (B1, B2) of the roller track.

4. Roller track according to one of the preceding claims, **characterized in that** further actuators or sensors (SR) can be connected via the feed line (Z).

## Revendications

1. Transporteur à rouleaux d'un système logistique, les rouleaux comportant un entraînement intégré qui peut être raccordé par l'intermédiaire de deux contacts à une alimentation en énergie électrique,
**caractérisé en ce que** des unités (EM) de traitement d'informations, destinées à commander l'entraînement, font parties intégrantes des rouleaux (R1), le flux d'information des unités passant par le chemin d'alimentation en énergie électrique.

2. Transporteur à rouleaux suivant la revendication 1,
**caractérisé en ce que** les. unités de traitement d'informations et l'équipement électronique pour l'entraînement sont regroupés en un module (EM) électronique.

3. Transporteur à rouleaux suivant la revendication 1,
**caractérisé en ce que** l'un (B1) des contacts est connecté sur une ligne (Z) isolée d'alimentation, et l'autre contact (B) est connecté sur un bâti (S1, S2) porteur électriquement conducteur du transporteur à rouleaux.

4. Transporteur à rouleaux suivant l'une des revendications précédentes, **caractérisé en ce que** d'autres actionneurs ou capteurs (SR) peuvent être raccordés par l'intermédiaire de la ligne (Z) d'alimentation.
